# FASCICULE DE BREVET EUROPEEN

(11) **EP 3 587 088 B1**
(45) Date de publication et mention de la délivrance du brevet: **30.03.2022**
(21) Numéro de dépôt: 19182367.3
(22) Date de dépôt: 25.06.2019
(51) Int. Cl.: B29C 70/38, G01B 11/25, G01B 11/24, G01B 11/00, B29C 70/30, G01B 21/04, G01C 11/02

(54) **DISPOSITIF ET PROCÉDÉ DE PROJECTION LASER POUR FABRICATION DE PIÈCES EN MATÉRIAU COMPOSITE PAR DRAPAGE**
VORRICHTUNG UND VEFAHREN ZUR LASERPROJEKTION FÜR DIE HERSTELLUNG VON WERKSTÜCKEN AUS VERBUNDMATERIAL DURCH UMHÜLLUNG
LASER PROJECTION DEVICE AND METHOD FOR MANUFACTURING PARTS IN COMPOSITE MATERIAL BY DRAPE MOULDING

(30) Priorité: 26.06.2018 FR 1855712
(43) Date de publication de la demande: 01.01.2020
(73) Titulaire: Safran Nacelles, 76700 Gonfreville l'Orcher (FR)
(72) Inventeur: MAZE, Franck, 76700 GONFREVILLE L'ORCHER (FR); COIN, Maxime, 76700 GONFREVILLE L'ORCHER (FR); LE HOUEROU, François, 76700 GONFREVILLE L'ORCHER (FR)
(74) Mandataire: Germain Maureau

(56) Documents cités:
- WO-A1-03/042924
- FR-A1- 3 006 621
- US-A- 6 000 801

## Description

La présente invention se rapporte au domaine de la fabrication de pièces en matériau composite par drapage, c'est-à-dire par dépôt de plis sur un moule sur lequel sont projetés, à l'aide d'un ou de plusieurs projecteurs laser, des contours délimitant des zones de dépôt des plis. La présente invention trouve notamment des applications dans le domaine aéronautique, en particulier pour fabriquer des pièces d'aéronefs ou de nacelles d'ensembles propulsifs.

Lors d'une opération de drapage manuel, le ou les projecteurs laser sont typiquement calibrés manuellement après positionnement du moule dans une position permettant à un opérateur d'y déposer des plis. Une calibration manuelle d'un projecteur laser peut prendre plusieurs minutes, typiquement une quinzaine de minutes.

Pour draper certaines pièces volumineuses, il peut s'avérer nécessaire de repositionner le moule, en particulier pour éviter à l'opérateur de prendre des positions corporelles non ergonomiques ou plus généralement des positions corporelles présentant des risques de sécurité ou pour sa santé.

Chaque repositionnement du moule nécessite de recalibrer le ou les projecteurs laser, prolongeant ainsi la durée de l'opération de drapage. Les inventeurs estiment qu'une cinquantaine de repositionnement de moule sont nécessaires pour certaines pièces de nacelle telles que des capots d'inverseur de poussée.

Le document US6000801 A décrit un dispositif et un procédé de projection laser pour drapage d'une pièce sur un moule.

La présente invention vise à procurer un dispositif et un procédé pour la fabrication de pièces en matériau composite, permettant notamment de réduire les durées de fabrication tout en évitant les risques précités.

Ce but est atteint avec un dispositif et un procédé de projection laser, ainsi qu'avec un procédé de drapage tels que décrits ci-après.

Selon un premier aspect, l'invention concerne un dispositif de projection laser pour drapage d'une pièce sur un moule avec des plis, ce dispositif comprenant :
- un support permettant de positionner le moule pour le drapage, ce support comprenant un élément fixe et un élément mobile capable de modifier la disposition spatiale du moule relativement à cet élément fixe,
- au moins un projecteur laser agencé pour tracer sur le moule des contours délimitant des zones de dépôt des plis,
- des mires de calibration aptes à être fixées sur le moule et/ou sur l'élément mobile du support, le projecteur comprenant un système de détection agencé pour détecter les mires,
- un ordinateur programmé pour déterminer la position, relativement au projecteur, des mires détectées par le système de détection, et pour déterminer la disposition spatiale du moule en fonction de la position de ces mires.

Selon l'invention, ce dispositif comprend en outre un ou plusieurs codeurs agencés pour mesurer un déplacement de l'élément mobile relativement à l'élément fixe. L'ordinateur est programmé pour déterminer la position théorique des mires en fonction d'un déplacement de l'élément mobile mesuré par le ou les codeurs, de manière à déterminer la disposition spatiale du moule lorsque celle-ci a été modifiée par déplacement de l'élément mobile.

La combinaison de ces différentes caractéristiques et en particulier l'utilisation de l'information délivrée par le ou les codeurs permettent de calibrer automatiquement le ou les projecteurs laser après repositionnement du moule. Cette calibration automatique, qui consiste dans la détermination de la disposition spatiale du moule, est en effet rendue possible par la prise en compte par l'ordinateur du déplacement mesuré de l'élément mobile lequel permet de déterminer la position théorique des mires.

L'invention permet ainsi de s'affranchir d'une étape de recalibration manuelle après repositionnement du moule.

De préférence, le déplacement de l'élément mobile peut être automatisé, c'est-à-dire que l'ordinateur peut être programmé pour piloter le déplacement de l'élément mobile de sorte que les contours tracés sur le moule définissent des zones de dépôt permettant à un opérateur de draper une pièce sur le moule en se plaçant dans une position ergonomique. On optimise ainsi l'opération de drapage en matière de sécurité, d'ergonomie et de santé.

Bien entendu, ce dispositif peut toutefois être agencé ou programmé pour autoriser un déplacement de l'élément mobile par l'opérateur lui-même pour lui permettre de définir ou d'ajuster sa position de travail à partir de la disposition spatiale du moule précédente ou atteinte après déplacement automatisé de l'élément mobile.

Par conséquent, l'automatisation du déplacement de l'élément mobile peut être totale, nulle ou partielle.

Dans un mode de réalisation, le dispositif peut comprendre un codeur linéaire apte à mesurer un déplacement en translation de l'élément mobile et/ou un codeur rotatif apte à mesurer un déplacement en rotation de l'élément mobile et/ou plusieurs codeurs linéaires et/ou rotatifs. De préférence, compte tenu des pièces à fabriquer par drapage dans le domaine aéronautique, on pourra utiliser un codeur linéaire et un codeur rotatif.

Selon un deuxième aspect, l'invention concerne aussi un procédé de projection laser sur un moule. Ce procédé comprend un positionnement initial du moule à l'aide d'un support comportant un élément fixe et un élément mobile, cet élément mobile étant agencé pour modifier la disposition spatiale du moule relativement à cet élément fixe. Ce procédé comprend aussi une fixation de mires de calibration sur le moule et/ou sur l'élément mobile du support, et comprend en outre une première série d'étapes comportant :
- une étape de détection d'une ou plusieurs desdites mires à l'aide d'un système de détection d'un projecteur laser,
- une étape de détermination, à l'aide d'un ordinateur, de la position réelle, relativement au projecteur, des mires détectées par le système de détection,
- une étape de détermination, à l'aide de l'ordinateur, de la disposition spatiale du moule en fonction de la position réelle des mires,
- une étape de projection laser, à l'aide du projecteur, de manière à tracer sur le moule de contours délimitant au moins une zone de dépôt d'au moins un pli,

Selon l'invention, ce procédé de projection laser comprend une deuxième série d'étapes comportant :
- une étape de déplacement de l'élément mobile relativement à l'élément fixe de manière à modifier la disposition spatiale du moule,
- une étape de mesure, à l'aide d'un ou de plusieurs codeurs, du déplacement de l'élément mobile,
- une étape de détermination, à l'aide de l'ordinateur, de la position théorique des mires en fonction du déplacement de l'élément mobile mesuré par le ou les codeurs.

Les étapes de la première série sont répétées après les étapes de la deuxième série.

Ce procédé confère les mêmes avantages précités que le dispositif de projection laser décrit ci-dessus.

Selon une première variante de réalisation, la deuxième série d'étapes peut comprendre, après l'étape de détermination de la position théorique des mires, une étape de temporisation permettant de retarder la mise en œuvre de la première série d'étapes. Cette étape de temporisation a une durée prédéterminée de préférence inférieure à quatre secondes, plus préférentiellement égale à deux secondes.

Selon une deuxième variante de réalisation, l'étape de temporisation peut être remplacée par une étape d'attente d'ordre permettant de déclencher la première série d'étapes seulement après ordre donné par un opérateur, par exemple lorsque celui-ci appui sur un bouton.

Selon une troisième variante de réalisation, on peut cumuler les deux variantes qui viennent d'être décrites de sorte que, si l'opérateur appui sur un bouton avant écoulement de la durée prédéterminée, la première série d'étapes soit mise en œuvre de manière forcée, c'est-à-dire avant écoulement de la totalité de cette durée prédéterminée.

Dans un mode de réalisation d'un procédé selon la première ou la troisième variante, on peut vérifier, pendant l'étape de temporisation, si le ou les codeurs mesurent un déplacement de l'élément mobile. Dans ce cas, si le ou les codeurs mesurent un déplacement de l'élément mobile, l'étape de temporisation est de préférence répétée.

Avantageusement, la première série d'étapes peut comprendre, après l'étape de détermination de la position réelle des mires détectées :
- une étape de détermination d'un nombre de mires détectables par le système de détection en fonction de la position réelle des mires détectées,
- une étape de détermination du nombre de mires défectueuses en fonction du nombre de mires détectables et du nombre de mires détectées,
- une étape d'alerte indiquant la présence d'une ou plusieurs mires défectueuses lorsqu'au moins une mire défectueuse a été déterminée, la première série d'étapes étant dans ce cas recommencée après une durée prédéterminée ou après réception par l'ordinateur d'une instruction de reprise du procédé qui peut prendre la forme d'un ordre donné par l'opérateur par appui sur un bouton.

Dans un mode de réalisation, la première série d'étapes peut comprendre, après l'étape de détection de mires, une étape d'alerte indiquant un positionnement inadéquat du moule et/ou du support lorsque le nombre de mires détectées est inférieur à un nombre prédéterminé. La première série d'étapes est dans ce cas recommencée après une durée prédéterminée ou après réception par l'ordinateur d'une instruction de reprise du procédé. Cette instruction peut consister en un ordre donné par l'opérateur par appui sur un bouton.

Selon un troisième aspect, l'invention concerne aussi un procédé de drapage d'une pièce sur un moule avec des plis, mettant en œuvre le procédé de projection laser décrit ci-dessus et dans lequel, après l'étape de projection laser, au moins un pli est déposé sur l'au moins une zone de dépôt du moule.

D'autres caractéristiques et avantages de l'invention apparaîtront à la lecture de la description nullement limitative qui suit et des figures annexées, dans lesquelles :
- La figure 1 est une vue schématique d'un dispositif de projection laser selon l'invention ;
- La figure 2 est une vue schématique d'un moule d'un dispositif selon l'invention, doté de mires de calibration ;
- La figure 3 est un organigramme représentant des étapes d'un procédé de projection laser selon l'invention.

Les éléments identiques ou similaires sont repérés par des signes de référence identiques sur l'ensemble des figures.

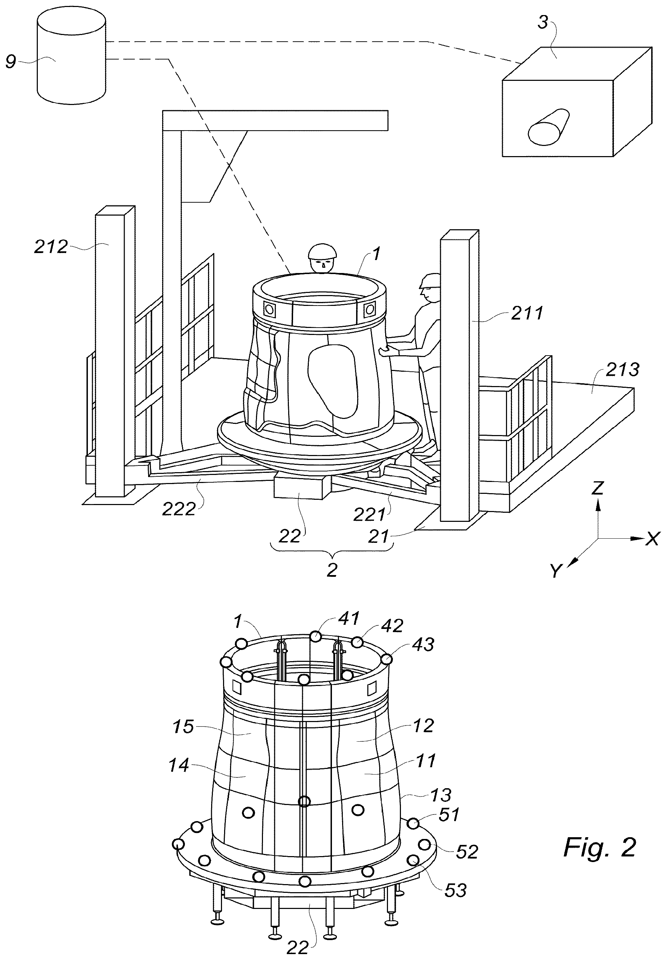

La figure 1 montre un dispositif de projection laser conforme à l'invention.

Ce dispositif comprend un moule 1 constituant un outillage de drapage. Ce moule 1 comprend une surface sur laquelle peuvent être déposés des plis de manière à constituer une pièce en matériau composite. Typiquement, après dépôt manuelle de plis préimprégnés, l'ensemble subit une étape de polymérisation en autoclave. La présente invention concerne plus spécifiquement l'opération de drapage en tant que telle, c'est-à-dire l'opération consistant à déposer les plis sur le moule 1.

Pour ce faire, le dispositif comprend un support 2 permettant de positionner le moule 1 pour le drapage.

Le support 2 comprend d'une part un élément fixe 21. Dans cet exemple, l'élément fixe 21 comprend des poutres 211 et 212 solidaires d'une plateforme 213 fixée ou reliée de manière stable au sol.

D'autre part, le support 2 comprend un élément mobile 22 capable de modifier la disposition spatiale du moule 1 relativement à l'élément fixe 21.

Dans cet exemple, l'élément mobile 22 est mobile en translation suivant la direction Z, le long de laquelle s'étendent les poutres 211 et 212. L'élément mobile 22 peut comprendre à cet effet des bras 221 et 222 agencés pour coulisser dans des rainures (non représentées) des poutres 211 et 212.

Dans cet exemple particulier, l'élément 22 est aussi mobile en rotation autour de la direction Z par l'intermédiaire d'une couronne de rotation (non représentée) ou de tout autre moyen approprié.

Le déplacement de l'élément mobile 22, en translation et/ou en rotation, est de préférence piloté par l'intermédiaire d'un ordinateur 9 qui peut comprendre des instructions préprogrammées de déplacement de l'élément mobile 22 et/ou avec lequel un opérateur peut interagir afin de piloter le déplacement de l'élément mobile 22 de la façon voulue.

Le dispositif peut comprendre un ou plusieurs projecteurs laser. Dans cet exemple, il comprend un unique projecteur laser 3 agencé pour tracer sur le moule 1 des contours délimitant des zones de dépôt des plis. La figure 2 fait apparaître de telles zones 11 à 15 de dépôt.

La figure 2 montre aussi des mires 41-43 de calibration fixées sur une partie supérieure du moule 1, ainsi que des mires 51-53 de calibration fixées sur une partie inférieure du moule 1.

Le projecteur 3 comprend un système de détection (non représenté) agencé pour détecter les mires 41-43, 51-53.

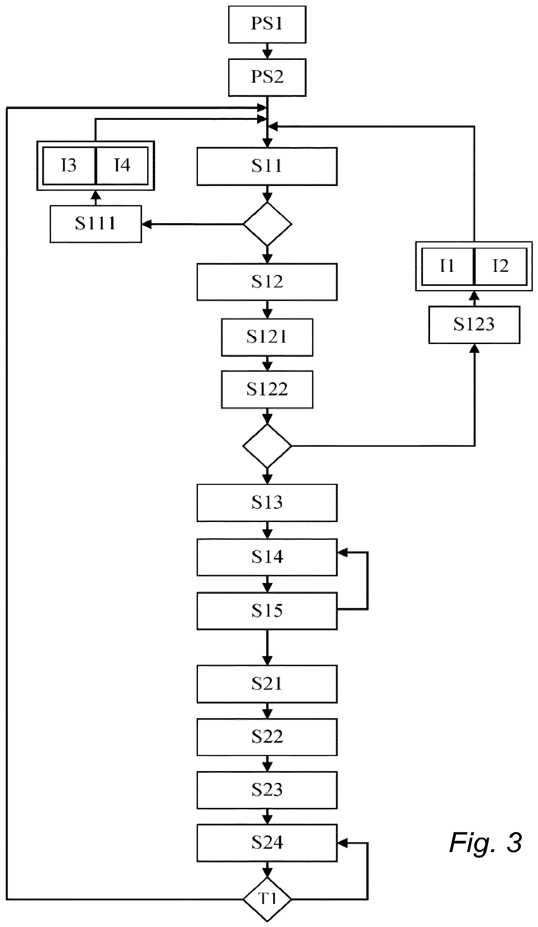

Lors d'une phase initiale, le moule 1 est positionné dans une position initiale sur l'élément mobile 22 du support 2 (étape PS1 à la figure 3).

Bien entendu, l'étape PS1 de positionnement initial du moule 1 et l'étape PS2 de fixation des mires sur le moule 1 peuvent être réalisés dans l'ordre chronologique indiqué à la figure 3 ou dans l'ordre inverse.

Dans cet exemple, lorsque le moule 1 est en position initiale, le projecteur 3 est calibré de manière automatique.

Alternativement, on peut envisager de réaliser cette calibration initiale manuellement selon toute technique connue. Typiquement dans ce cas, un opérateur oriente manuellement le projecteur 3 de manière à viser une à une les mires de calibration ou au moins une partie des mires visibles en fonction de la position respective du projecteur 3, des mires et du moule 1.

Selon l'invention, le dispositif comprend par ailleurs des codeurs (non représentés). Dans cet exemple, on utilise un codeur linéaire pour mesurer un déplacement en translation de l'élément mobile 22, le long de la direction Z, et un codeur rotatif pour mesurer un déplacement en rotation de l'élément mobile 22, autour de la direction Z.

Lorsque le moule 1 est en position initiale, les codeurs sont de préférence initialisés en position zéro.

En référence à la figure 3, on décrit ci-dessous un exemple de succession d'étapes conforme à l'invention, ces étapes étant réalisées à l'issue de la phase initiale qui vient d'être décrite.

Dans une étape S11, on utilise le système de détection (non représenté) du projecteur 3 pour détecter une ou plusieurs desdites mires 41-43, 51-53.

Optionnellement, à l'issue de l'étape S11 de détection de mires, on peut mettre en œuvre une étape S111 d'alerte afin d'indiquer, lorsque le nombre de mires détectées est inférieur à un nombre prédéterminé, que le positionnement du moule 1 et/ou du support 2 est inadéquat. Si tel est le cas, après une durée prédéterminée I3 ou après réception par l'ordinateur 9 d'une instruction I4 de reprise du procédé, on recommence l'étape S11 de détection. L'instruction I4 peut consister en un ordre donné par un opérateur par appui sur un bouton (non représenté).

Après l'étape S11 de détection, lorsque le nombre de mires détectées est égal ou supérieur audit nombre prédéterminé (si l'étape S111 d'alerte est mise en œuvre), on met en œuvre une étape S12 dans laquelle l'ordinateur 9 détermine la position réelle, relativement au projecteur 3, des mires détectées par le système de détection.

Sur la base de la position réelle des mires, l'ordinateur 9 peut alors déterminer la disposition spatiale dans laquelle se trouve le moule 1 (étape S13), étant entendu que l'ordinateur 9 comprend un modèle du moule 1 et connaît la position des mires sur le moule 1.

Toutefois, avant de réaliser cette étape S13 de détermination de la disposition spatiale du moule 1, on peut vérifier si des mires sont défectueuses en mettant en œuvre :
- une étape S121 de détermination d'un nombre de mires détectables par le système de détection (non représenté) en fonction de la position réelle des mires détectées,
- une étape S122 de détermination du nombre de mires défectueuses en fonction du nombre de mires détectables et du nombre de mires détectées,
- une étape S123 d'alerte indiquant la présence d'une ou plusieurs mires défectueuses lorsqu'au moins une mire défectueuse a été déterminée.

En cas de présence d'au moins une mire défectueuse, on revient à l'étape S11 de détection soit après une durée prédéterminée I1 ou après réception par l'ordinateur 9 d'une instruction I2 de reprise. L'instruction I2 peut prendre la forme d'un ordre donné par l'opérateur par appui sur un bouton (non représenté).

Lorsque l'ordinateur 9 a déterminé la disposition spatiale du moule 1 lors de l'étape S13, on réalise alors une étape S14 de projection laser, à l'aide du projecteur 3, de manière à tracer sur le moule 1 des contours délimitant des zones de dépôt de plis.

Les contours peuvent être tracés de manière à délimiter successivement et/ou simultanément plusieurs zones 11-15 de dépôt.

Un ou plusieurs opérateurs peuvent alors déposer des plis sur les zones de dépôt correspondantes (étape S15).

Lorsque le moule 1 doit être déplacé pour permettre un dépôt de plis dans des conditions ergonomiques, l'élément mobile 22 du support 2 est déplacé relativement à l'élément fixe 21 de manière à modifier la disposition spatiale du moule 1 (étape S21).

De préférence, le déplacement de l'élément mobile 22 lors de cette étape S21 est automatisé et l'ordinateur 9 peut être programmé à cet effet pour piloter automatiquement cette action.

Lorsque l'étape S21 de déplacement est automatisée, le démarrage de cette étape est de préférence déclenché manuellement par un opérateur, par exemple via un ordre donné à l'ordinateur 9 par l'intermédiaire d'un bouton (non représenté). Alternativement, il est aussi possible d'initier cette étape S21 automatiquement après une durée prédéterminée.

Une certaine flexibilité peut aussi être envisagée en permettant à l'opérateur de piloter manuellement le déplacement de l'élément mobile 22, au moins dans une mesure n'entravant pas la capacité du dispositif à recalibrer automatiquement le projecteur 3 selon la procédure décrite ci-dessous.

Pour réaliser une recalibration automatique après déplacement de l'élément mobile 22 lors de l'étape S21, on met dans cet exemple en œuvre les étapes suivantes :
- une étape S22 de mesure, à l'aide des codeurs, du déplacement de l'élément mobile 22,
- une étape S23 de détermination, à l'aide de l'ordinateur 9, de la position théorique des mires 41-43 et 51-53 en fonction du déplacement de l'élément mobile 22 mesuré par les codeurs,
- une étape S24 soit de temporisation (écoulement d'une durée prédéterminée) soit d'attente d'ordre émanant d'un opérateur, par exemple lorsque celui-ci appui sur un bouton (non représenté),
- optionnellement, une vérification T1 d'un éventuel déplacement mesuré par les codeurs pendant l'étape S24 de temporisation, l'étape S24 étant répétée si les codeurs mesurent un déplacement de l'élément mobile 22.

A l'issue de l'étape S23, l'ordinateur 9 connaît la position théorique des mires 41-43 et 51-53. La détection des mires ensuite réalisée lors de l'étape S11 peut ainsi être réalisée sans recalibration manuelle. Le procédé selon l'invention procure ainsi une méthode de recalibration automatique du projecteur 3 après modification de la disposition spatiale du moule 1.

Bien entendu, l'invention n'est pas limitée aux exemples qui viennent d'être décrits et de nombreux aménagements peuvent être apportés à ces exemples sans sortir du cadre de l'invention tel que défini par les revendications. Par exemple, la projection laser peut être réalisée à l'aide de plusieurs projecteurs (non représentés), ce qui peut notamment permettre d'augmenter le nombre de plis pouvant être déposés sur le moule 1 sans modification de sa disposition spatiale.

## Revendications

1. Dispositif de projection laser pour drapage d'une pièce sur un moule (1) avec des plis, ce dispositif comprenant :
- un support (2) permettant de positionner le moule (1) pour le drapage, ce support comprenant un élément fixe (21) et un élément mobile (22) capable de modifier la disposition spatiale du moule (1) relativement à cet élément fixe (21),
- au moins un projecteur (3) laser agencé pour tracer sur le moule (1) des contours délimitant des zones (11-15) de dépôt des plis,
- des mires (41-43, 51-53) de calibration aptes à être fixées sur le moule (1) et/ou sur l'élément mobile (22) du support (2), le projecteur (3) comprenant un système de détection agencé pour détecter les mires,
- un ordinateur (9) programmé pour déterminer la position, relativement au projecteur (3), des mires détectées par le système de détection, et pour déterminer la disposition spatiale du moule (1) en fonction de la position de ces mires,
ce dispositif étant **caractérisé en ce qu'**il comprend en outre un ou plusieurs codeurs agencés pour mesurer un déplacement de l'élément mobile (22) relativement à l'élément fixe (21), et **en ce que** l'ordinateur (9) est programmé pour déterminer la position théorique des mires (41-43, 51-53) en fonction d'un déplacement de l'élément mobile (22) mesuré par le ou les codeurs, de manière à déterminer la disposition spatiale du moule (1) lorsque celle-ci a été modifiée par déplacement de l'élément mobile (22).

2. Dispositif selon la revendication 1, comprenant un codeur linéaire apte à mesurer un déplacement en translation de l'élément mobile (22) et un codeur rotatif apte à mesurer un déplacement en rotation de l'élément mobile (22).

3. Procédé de projection laser sur un moule (1), comprenant un positionnement (PS1) initial du moule à l'aide d'un support (2), ce support (2) comportant un élément fixe (21) et un élément mobile (22) agencé pour modifier la disposition spatiale du moule (1) relativement à cet élément fixe (21), et une fixation (PS2) de mires (41-43, 51-53) de calibration sur le moule (1) et/ou sur l'élément mobile (22) du support (2), ce procédé comprenant une première série d'étapes comportant :
- une étape de détection (S11) d'une ou plusieurs desdites mires (41-43, 51-53) à l'aide d'un système de détection d'un projecteur (3) laser,
- une étape de détermination (S12), à l'aide d'un ordinateur (9), de la position réelle, relativement au projecteur (3), des mires détectées par le système de détection,
- une étape de détermination (S13), à l'aide de l'ordinateur (9), de la disposition spatiale du moule (1) en fonction de la position réelle des mires,
- une étape de projection laser (S14), à l'aide du projecteur (3), de manière à tracer sur le moule (1) de contours délimitant au moins une zone (11-15) de dépôt d'au moins un pli,
ce procédé étant **caractérisé en ce qu'**il comprend une deuxième série d'étapes comportant :
- une étape de déplacement (S21) de l'élément mobile (22) relativement à l'élément fixe (21) de manière à modifier la disposition spatiale du moule (1),
- une étape de mesure (S22), à l'aide d'un ou de plusieurs codeurs, du déplacement de l'élément mobile (22),
- une étape de détermination (S23), à l'aide de l'ordinateur (9), de la position théorique des mires (41-43, 51-53) en fonction du déplacement de l'élément mobile (22) mesuré par le ou les codeurs,
et **en ce que** les étapes de la première série sont répétées après les étapes de la deuxième série.

4. Procédé de projection laser selon la revendication 3, dans lequel la deuxième série d'étapes comprend, après l'étape de détermination (S23) de la position théorique des mires, une étape de temporisation (S24) permettant de retarder la mise en œuvre de la première série d'étapes, cette étape de temporisation (S24) ayant une durée prédéterminée de préférence inférieure à quatre secondes, plus préférentiellement égale à deux secondes.

5. Procédé de projection laser selon la revendication 4, dans lequel on vérifie (T1), pendant l'étape de temporisation (S24), si le ou les codeurs mesurent un déplacement de l'élément mobile (22), l'étape de temporisation (S24) étant répétée si le ou les codeurs mesurent un déplacement de l'élément mobile (22).

6. Procédé de projection laser selon l'une quelconque des revendications 3 à 5, dans lequel la première série d'étapes comprend, après l'étape de détermination (S12) de la position réelle des mires détectées :
- une étape de détermination (S121) d'un nombre de mires détectables par le système de détection en fonction de la position réelle des mires détectées,
- une étape de détermination (S122) du nombre de mires défectueuses en fonction du nombre de mires détectables et du nombre de mires détectées,
- une étape d'alerte (S123) indiquant la présence d'une ou plusieurs mires défectueuses lorsqu'au moins une mire défectueuse a été déterminée, la première série d'étapes étant dans ce cas recommencée après une durée prédéterminée (I1) ou après réception par l'ordinateur (9) d'une instruction (I2) de reprise du procédé.

7. Procédé de projection laser selon l'une quelconque des revendications 3 à 6, dans lequel la première série d'étapes comprend, après l'étape de détection (S11) de mires, une étape d'alerte (S111) indiquant un positionnement inadéquat du moule (1) et/ou du support (2) lorsque le nombre de mires détectées est inférieur à un nombre prédéterminé, la première série d'étapes étant dans ce cas recommencée après une durée prédéterminée (I3) ou après réception par l'ordinateur (9) d'une instruction (I4) de reprise du procédé.

8. Procédé de drapage d'une pièce sur un moule (1) avec des plis, mettant en œuvre le procédé de projection laser selon l'une quelconque des revendications 3 à 7, dans lequel, après l'étape de projection laser (S14), au moins un pli est déposé (S15) sur l'au moins une zone (11-15) de dépôt du moule (1).

## Patentansprüche

1. Vorrichtung zur Laserprojektion für die Drapierung eines Werkstücks auf einer Form (1) mit Falten, wobei diese Vorrichtung umfasst:
- einen Träger (2), der es ermöglicht, die Form (1) für die Drapierung zu positionieren, wobei dieser Träger ein festes Element (21) und ein bewegliches Element (22) umfasst, das imstande ist, die räumliche Anordnung der Form (1) bezogen auf dieses feste Element (21) zu ändern,
- wenigstens einen Laserprojektor (3), der angeordnet ist, um auf der Form (1) Konturen zu zeichnen, die Zonen (11-15) zum Aufbringen der Falten begrenzen,
- Kalibriermarken (41-43, 51-53), die geeignet sind, auf der Form (1) und/oder auf dem beweglichen Element (22) des Trägers (2) befestigt zu werden, wobei der Projektor (3) ein Erkennungssystem umfasst, das angeordnet ist, um die Marken zu erkennen,
- einen Rechner (9), der programmiert ist, um die Position, bezogen auf den Projektor (3), der von dem Erkennungssystem erkannten Marken zu bestimmen und um die räumliche Anordnung der Form (1) in Abhängigkeit von der Position dieser Marken zu bestimmen,
wobei diese Vorrichtung **dadurch gekennzeichnet ist, dass** sie weiter einen oder mehrere Messwertgeber umfasst, die angeordnet sind, um eine Bewegung des beweglichen Elements (22) bezogen auf das feste Element (21) zu messen, und dadurch, dass der Rechner (9) programmiert ist, um die theoretische Position der Marken (41-43, 51-53) in Abhängigkeit von einer durch den oder die Messwertgeber gemessenen Bewegung des beweglichen Elements (22) zu bestimmen, sodass die räumliche Anordnung der Form (1) bestimmt wird, wenn diese durch eine Bewegung des beweglichen Elements (22) geändert worden ist.

2. Vorrichtung nach Anspruch 1, umfassend einen Lineargeber, der geeignet ist, eine Translationsbewegung des beweglichen Elements (22) zu messen, und einen Drehgeber, der geeignet ist, eine Drehbewegung des beweglichen Elements (22) zu messen.

3. Verfahren zur Laserprojektion auf eine Form (1), umfassend eine Ausgangspositionierung (PS1) der Form mithilfe eines Trägers (2), wobei dieser Träger (2) ein festes Element (21) und ein bewegliches Element (22) umfasst, das angeordnet ist, um die räumliche Anordnung der Form (1) bezogen auf dieses feste Element (21) zu ändern, und eine Fixierung (PS2) von Kalibriermarken (41-43, 51-53) auf der Form (1) und/oder auf dem beweglichen Element (22) des Trägers (2), wobei dieses Verfahren eine erste Reihe von Schritten umfasst, umfassend:
- einen Schritt zur Erkennung (S11) einer oder mehrerer der Marken (41-43, 51-53) mithilfe eines Erkennungssystems eines Laserprojektors (3),
- einen Schritt zur Bestimmung (S12), mithilfe eines Rechners (9), der reellen Position, bezogen auf den Projektor (3), der von dem Erkennungssystem erkannten Marken,
- einen Schritt zur Bestimmung (S13), mithilfe des Rechners (9), der räumlichen Anordnung der Form (1) in Abhängigkeit von der reellen Position der Marken,
- einen Schritt zur Laserprojektion (S14), mithilfe des Projektors (3), sodass auf die Form (1) Konturen gezeichnet werden, die wenigstens eine Zone (11-15) zur Aufbringung wenigstens einer Falte begrenzen,
wobei dieses Verfahren **dadurch gekennzeichnet ist, dass** es eine zweite Reihe von Schritten umfasst, umfassend:
- einen Schritt zur Bewegung (S21) des beweglichen Elements (22) bezogen auf das feste Element (21), sodass die räumliche Anordnung der Form (1) geändert wird,
- einen Schritt zur Messung (S22), mithilfe eines oder mehrerer Messwertgeber, der Bewegung des beweglichen Elements (22),
- einen Schritt zur Bestimmung (S23), mithilfe des Rechners (9), der theoretischen Position der Marken (41-43, 51-53) in Abhängigkeit von der Bewegung des beweglichen Elements (22), die von dem oder den Messwertgebern gemessen wurde,
und dadurch, dass die Schritte der ersten Reihe nach den Schritten der zweiten Reihe wiederholt werden.

4. Verfahren zur Laserprojektion nach Anspruch 3, wobei die zweite Reihe von Schritten, nach dem Schritt zur Bestimmung (S23) der theoretischen Position der Marken, einen Schritt zur Verzögerung (S24) umfasst, der es ermöglicht, die Umsetzung der ersten Reihe von Schritten zu verzögern, wobei dieser Schritt zur Verzögerung (S24) eine vorbestimmte Dauer aufweist, die vorzugsweise kleiner als vier Sekunden ist, besonders bevorzugt gleich zwei Sekunden.

5. Verfahren zur Laserprojektion nach Anspruch 4, wobei während des Schritts zur Verzögerung (S24) überprüft (T1) wird, ob der oder die Messwertgeber eine Bewegung des beweglichen Elements (22) messen, wobei der Schritt zur Verzögerung (S24) wiederholt wird, wenn der oder die Messwertgeber eine Bewegung des beweglichen Elements (22) messen.

6. Verfahren zur Laserprojektion nach einem der Ansprüche 3 bis 5, wobei die erste Reihe von Schritten, nach dem Schritt zur Bestimmung (S12) der reellen Position der erkannten Marken, umfasst:
- einen Schritt zur Bestimmung (S121) einer Anzahl von Marken, die von dem Erkennungssystem erkennbar sind, in Abhängigkeit von der reellen Position der erkannten Marken,
- einen Schritt zur Bestimmung (S122) der Anzahl defekter Marken in Abhängigkeit von der Anzahl erkennbarer Marken und von der Anzahl erkannter Marken,
- einen Schritt zur Meldung (S123), der das Vorhandensein einer oder mehrerer defekter Marken anzeigt, wenn wenigstens eine defekte Marke bestimmt worden ist, wobei die erste Reihe von Schritten in diesem Fall nach einer vorbestimmten Dauer (I1) oder nach Empfang einer Anweisung (I2) zur Wiederaufnahme des Verfahrens durch den Rechner (9) neu begonnen wird.

7. Verfahren zur Laserprojektion nach einem der Ansprüche 3 bis 6, wobei die erste Reihe von Schritten, nach dem Schritt zur Erkennung (S11) von Marken, einen Schritt zur Meldung (S111) umfasst, der eine inadäquate Positionierung der Form (1) und/oder des Trägers (2) anzeigt, wenn die Anzahl erkannter Marken kleiner ist als eine vorbestimmte Anzahl, wobei die erste Reihe von Schritten in diesem Fall nach einer vorbestimmten Dauer (I3) oder nach Empfang einer Anweisung (I4) zur Wiederaufnahme des Verfahrens durch den Rechner (9) neu begonnen wird.

8. Verfahren zur Drapierung eines Werkstücks auf einer Form (1) mit Falten, wobei ein Verfahren zur Laserprojektion nach einem der Ansprüche 3 bis 7 umgesetzt wird, bei dem, nach dem Schritt zur Laserprojektion (S14), wenigstens eine Falte auf die wenigstens eine Aufbringungszone (11-15) der Form (1) aufgebracht (S15) wird.

## Claims

1. A laser projection device for drape-molding a part on a mold (1) with plies, this device comprising:
- a support (2) allowing positioning the mold (1) for the drape-molding, this support comprising a fixed element (21) and a movable element (22) capable of modifying the spatial arrangement of the mold (1) relative to this fixed element (21),
- at least one laser projector (3) arranged to draw contours on the mold (1), to delimit areas (11-15) for depositing the plies,
- calibration patterns (41-43, 51-53) adapted to be attached on the mold (1) and/or on the movable element (22) of the support (2), the projector (3) comprising a detection system arranged to detect the patterns,
- a computer (9) programmed to determine the position of the calibration patterns detected by the detection system, relative to the projector (3), and to determine the spatial arrangement of the mold (1) according to the position of these patterns,
this device being **characterized in that** it further comprises one or several encoder(s) arranged to measure a displacement of the movable element (22) relative to the fixed element (21), and **in that** the computer (9) is programmed to determine the theoretical position of the patterns (41-43, 51-53) according to a displacement of the movable element (22) measured by the encoder(s), so as to determine the spatial arrangement of the mold (1) when said spatial arrangement has been modified by displacing the movable element (22).

2. The device according to claim 1, comprising a linear encoder adapted to measure a translational displacement of the movable element (22) and a rotary encoder adapted to measure a rotational displacement of the movable element (2).

3. A method for laser projection on a mold (1), comprising an initial positioning (PS1) of the mold using a support (2), this support (2) including a fixed element (21) and a movable element (22) arranged to modify the spatial arrangement of the mold (1) relative to this fixed element (21), and a fastening (PS2) of calibration patterns (41-43, 51-53) on the mold (1) and/or on the movable element (22) of the support (2), this method comprising a first series of steps including:
- a step (S11) of detecting one or more of said patterns (41-43, 51-53) using a detection system of a laser projector (3),
- a step (S12) of determining the actual position of the patterns detected by the detection system, relative to the projector (3), using a computer (9),
- a step (S13) of determining the spatial arrangement of the mold (1) according to the actual position of the patterns, using the computer (9),
- a laser projection step (S14), using the projector (3), so as to draw contours on the mold (1), to delimit at least one area (11-15) for depositing at least one ply,
this method being **characterized in that** it comprises a second series of steps including:
- a step (S21) of displacing the movable element (22) relative to the fixed element (21) so as to modify the spatial arrangement of the mold (1),
- a step (S22) of measuring the displacement of the movable element (22), using one or several encoder(s),
- a step (S23) of determining the theoretical position of the patterns (41-43, 51-53) according to the displacement of the movable element (22) measured by the encoder(s), using the computer (9),
and **in that** the steps of the first series are repeated after the steps of the second series.

4. The laser projection method according to claim 3, wherein the second series of steps comprises, after the step (S23) of determining the theoretical position of the patterns, a timing step (S24) allowing delaying the implementation of the first series of steps, this timing step (S24) having a predetermined time duration preferably less than four seconds, more preferably equal to two seconds.

5. The laser projection method according to claim 4, wherein it is checked (T1), during the timing step (S24), whether the encoder(s) measure a displacement of the movable element (22), the timing step (S24) being repeated if the encoder(s) measure a displacement of the movable element (22).

6. The laser projection method according to any one of claims 3 to 5, wherein the first series of steps comprises, after the step (S12) of determining the actual position of the detected patterns:
- a step (S121) of determining a number of patterns detectable by the detection system according to the actual position of the detected patterns,
- a step (S122) of determining the number of out of tolerance patterns according to the number of detectable patterns and the number of detected patterns,
- an alerting step (S123) indicating the presence of one or several out of tolerance pattern(s) when at least one out of tolerance pattern has been determined, the first series of steps being, in this case, restarted after a predetermined time duration (11) or after receiving an instruction (12) for resuming the method, by the computer (9).

7. The laser projection method according to any one of claims 3 to 6, wherein the first series of steps comprises, after the step (S11) of detecting patterns, an alerting step (S111) indicating an inadequate positioning of the mold (1) and/or the support (2) when the number of detected patterns is less than a predetermined number, the first series of steps being, in this case, restarted after a predetermined time duration (13) or after receiving an instruction (14) for resuming the method, by the computer (9).

8. A method for drape-molding a part on a mold (1) with plies, implementing the laser projection method according to any one of claims 3 to 7, wherein, after the laser projection step (S14), at least one ply is deposited (S15) on the at least one deposition area (11-15) of the mold (1).
